# EUROPÄISCHE PATENTSCHRIFT

(11) **EP 2 206 566 B1**
(45) Veröffentlichungstag und Bekanntmachung des Hinweises auf die Patenterteilung: **12.03.2014**
(21) Anmeldenummer: 10150306.8
(22) Anmeldetag: 08.01.2010
(51) Int. Cl.: B09B 3/00

(54) **Vorrichtung und Verfahren zur strukturellen Umwandlung von Mineralwolle**
Method and device for changing the structure of mineral wool
Dispositif et procédé de transformation structurelle de laine minérale

(30) Priorität: 09.01.2009 DE 102009004176
(43) Veröffentlichungstag der Anmeldung: 14.07.2010
(73) Patentinhaber: Reimann Umweltschutz GmbH, 99869 Seebergen (DE); MWT Gesellschaft für Industrielle Mikrowellentechnik mbH, 65604 Elz (DE)
(72) Erfinder: Reimann, Marco, 99869 Seebergen (DE); Müller, Anette, 99425 Weimar (DE); Stanelle, Katja, 99423 Weimar (DE); Reimann, Norbert, 99869 Seebergen (DE); Schulze, Reinhard, 56477 Rennerod (DE); Leydolph, Barbara, 99428 Nora (DE)
(74) Vertreter: Liedtke, Markus

(56) Entgegenhaltungen:
- EP-A1- 2 062 660
- WO-A1-99/37590
- WO-A2-2007/053046
- DE-A1- 19 526 495
- JP-A- 2008 272 562
- US-A- 6 104 018
- LEONELLI C ET AL: "Microwave thermal inertisation of asbestos containing waste and its recycling in traditional ceramics", JOURNAL OF HAZARDOUS MATERIALS, ELSEVIER, Bd. 135, Nr. 1-3, 31. Juli 2006 (2006-07-31), Seiten 149-155, XP025022593, ISSN: 0304-3894, DOI: 10.1016/J.JHAZMAT.2005.11.035 [gefunden am 2006-07-31]

## Beschreibung

Die Erfindung betrifft eine Vorrichtung und ein Verfahren zur strukturellen Umwandlung von Mineralwolle.

Besonders Mineralwolle, welche vor 1996 verwendet worden ist, kann für Menschen krebserzeugend oder krebsverdächtig sein, wobei eine Alterung von Fasern der Mineralwolle, welche insbesondere durch eine Versprödung und/oder Zersetzung von Zusatzstoffen der Mineralwolle gekennzeichnet ist, zu einer Erhöhung einer Lungengängigkeit dieser "alten" Mineralwolle führt und somit die gesundheitsschädigende Wirkung für Menschen verstärkt.

Im Rahmen von Gebäuderückbau- und Sanierungsarbeiten fallen allein in Deutschland jährlich 200.000 bis 300.000 Tonnen Mineralwollabfälle an, wobei gesundheitsgefährliche Faserstäube nicht freigesetzt werden dürfen.

Mineralwolle ist eine Sammelbezeichnung für eine Gruppe synthetischer glasiger Fasern, welche aus silikatischen Schmelzen hergestellt werden. Ausgangsmaterialen der "alten" Mineralwolle sind Sediment oder Eruptivgesteine, wie Basalt, Schiefer oder Diabas. Die Mineralfasern bestehen vorwiegend aus Oxiden, wie Siliziumoxid (SiO₂), Aluminiumoxid (Al₂O₃), Calciumoxid (CaO) oder Magnesiumoxid (MgO), die eine sehr gute chemische Beständigkeit aufweisen. Bei der kann es sich im Weiteren um asbesthaltige Mineralwolle handeln.

Die "alten" Mineralfasern können lungengängige Fasern freisetzen, welche biobeständig sind und eine tumorbildende Wirkung besitzen. Dabei zählen zu gesundheitlich relevanten, lungengängigen Fasern insbesondere solche, welche eine Länge von mehr als 5 µm, einen Durchmesser von weniger als 3 µm und ein Längen-/Durchmesserverhältnis von mehr als 3 aufweisen.

Diese Faserabmessungen sind nach einer Empfehlung der Weltgesundheitsorganisation (WHO - World Health Organization) zur Vorbeugung von Lungenkrankheiten zu berücksichtigen.

Aus den genannten Gründen ist es erforderlich, Mineralwolle derart zu behandeln, dass ein Freisetzen der Mineralfasern und somit eine Gesundheitsgefährdung für Menschen vermieden werden.

Aus dem Stand der Technik ist ein Verfahren zur Strukturveränderung von Mineralwolle bekannt, bei welchem die Mineralwolle zerkleinert, insbesondere gemahlen, sowie mit einer Tonsuspension und Melasse gemischt wird. Das Gemisch wird anschließend verpresst, konfektioniert und als Zusatzwerkstoff für die Herstellung von Ziegeln verwendet. Nachteilig ist jedoch, dass durch das Mahlen der Mineralwolle ein besonders großes Freisetzungsrisiko der Mineralfasern entsteht und die endgültige Umwandlung des Gefahrstoffes und die Zerstörung der Faserstruktur erst im Prozess des Brennens der Ziegeln erfolgt.

Beispielsweise sind aus der EP 1 588 783 A1 ein Verfahren und eine Vorrichtung zur Umwandlung von Industrieabfällen, bestehend aus Inosilikaten, Phyllosilikaten oder anderen faserartigen Silikatmineralien. Während des Verfahrens werden die Industrieabfälle derart mittels Mikrowellenstrahlung behandelt, dass Wasser und Kristallwasser entfernt und somit die faserartige Struktur der Minerale, insbesondere von Asbest, zerstört wird, wobei die Mineralien in ein chemisch inaktives, nicht flüchtiges Produkt umgewandelt werden.

Weiterhin ist aus der DE 43 03 729 A1 ein Verfahren zur Zersetzung von gesundheitsgefährdenden anorganisch-nichtmetallischen Faserstoffen bekannt. Bei den Faserstoffen handelt es sich insbesondere um Asbest sowie um asbesthaltige Materialien einschließlich des Asbestzementes. Die Zersetzung erfolgt durch Einwirkung von hochfrequenter, energiereicher elektromagnetischer Strahlung mit einer Frequenz im Bereich von 0,3 bis 300 GHz (Mikrowellen). Im Ergebnis der Strahlungseinwirkung kommt es bei den silikatischen Faserstoffen zu Dehydroxylierungsreaktionen und es bilden sich dabei die Umwelt nicht belastende Produkte.

Die WO 2007/053046 A2 beschreibt ein Verfahren und eine Vorrichtung zur Verwertung von asbesthaltigen Materialien. Dabei wird das asbesthaltige Material derart unter Verwendung eines elektromagnetischen Feldes erhitzt und zusätzlich zerkleinert, dass das Endprodukt keine kristalline und faserartige Struktur aufweist. Das zerkleinerte Material wird zu einem Mikrowellenreaktor transportiert. Während des Transport- und Zerkleinerungsprozesses werden Stücken des Materials mit einer Substanz vermischt, welches die Erhitzung erleichtert. Nach einer Anordnung des mit der Substanz gemischten Materials in dem Reaktor wird dieses bis zum Erreichen einer bestimmten Temperatur erhitzt, welche die strukturelle Umwandlung ermöglicht. Dies geschieht durch den Effekt von polarisierten Strahlen konzentrierter elektromagnetischer Strahlung innerhalb eines Frequenzbandes von 300 MHz bis 3000 MHz. Das Endprodukt des Erhitzungsprozesses wird anschließend aus dem Reaktor entnommen, abgekühlt und wird dem Prozess der abschließenden Zerkleinerung unterzogen. Die Vorrichtung umfasst eine Zerkleinerungsmaschine, eine Förderschnecke für das zerkleinerte Material, eine Einheit zur Zuführung der erhitzungsfördernden Substanz und einen Mikrowellenreaktor. Die Einheit zur Zuführung der Substanz ist dabei mit der Zerkleinerungsmaschine und/oder der Förderschnecke gekoppelt. Der Mikrowellenreaktor weist eine am Ausgang der Förderschnecke angeordnete Wärmekammer auf, welche aus einem Material gebildet ist, die Mikrowellen nicht absorbiert. Die Wärmekammer ist innerhalb eines Metallgehäuses angeordnet, wobei an dem Metallgehäuse kreisförmig Mikrowellengeneratoren angeordnet sind. Die Mikrowellengeneratoren sind mit Mikrowellenradiatoren gekoppelt, wobei die Mikrowellengeneratoren sich gegenüber stehend angeordnet sind und über die Mikrowellenradiatoren derart mit der Wärmekammer gekoppelt sind, dass diese senkrecht zueinander polarisierte Wellen abstrahlen. Unterhalb der Wärmekammer ist eine Kegelzerkleinerungsmaschine angeordnet, welche das Endprodukt zerkleinert.

Die DE 195 26 495 A1 offenbart ein Verfahren und eine Vorrichtung zum thermischen Umwandeln faseriger Stoffe. Bei dem Verfahren werden mit hydraulisch abbindenden Mitteln gebundene Stoffe, beispielsweise Baustoffe, mit Fasern auf mineralischer Basis, wie Glas- Gesteins- oder Asbestfasern behandelt. Dabei werden die faserigen Stoffe in einer Behandlungskammer einem elektromagnetischen Strahlungsfeld mit Wellenlängen im Bereich von 10-1 m bis 10-6 m, wovon zumindest ein Teil im Bereich eines Absorptionsmaximums liegt, ausgesetzt und so erhitzt wird, dass die faserige Struktur aufgelöst wird. Die Vorrichtung zur Durchführung des Verfahrens weist eine Behandlungskammer auf, in die das zu behandelnde Material eingefüllt ist und an die von einer Seite her ein Generator für elektromagnetische Schwingungen über einen Strahlungsgeber so angeschlossen ist, dass in der Behandlungskammer ein elektromagnetisches Strahlungsfeld ausgebildet ist. Die Behandlungskammer ist mit einer Einfüllöffnung und mit einer Auslassöffnung versehen, die mit Absperrschiebern verschließbar sind, wobei die Vorrichtung insgesamt mit einer Schirmhülle zur Verhinderung einer unerwünschten Abstrahlung elektromagnetischer Energie versehen ist.

Zusätzlich ist aus der US 6 104 018 A1 eine Vorrichtung zur Erzeugung einer konstanten Erhitzung eines in einem zylinderförmigen Behälter angeordneten Materials bekannt. Die Vorrichtung ist dabei derart ausgebildet, dass eine TE₁₀-Mode-Mikrowellenstrahlung in eine zylinderartige TE₁₁-, TE₀₁- und TM₀₁-Mode-Mikrowellenstrahlung umwandelbar ist, wobei anhand einer Justierung einer Intensität dieser Modi eine im Wesentlichen konstante Erhitzung der Materialien in dem zylinderförmigen Behälter erzielbar ist.

Weiterhin sind aus der nächstkommenden WO 99/37590 A1 eine Vorrichtung und ein Verfahren zur Behandlung eines Materials bekannt, wobei das Material Asbest umfasst und bei der Behandlung mittels Mikrowellen strukturell umgewandelt wird.

Leoncelli, C. et al: "Microwave thermal inertisation of asbestos containing waste and ist recycling in traditional ceramics"; In: Journal Of Hazardous Material, Elsevier, Band 135, Nr. 1-3, Juli 2006, Seiten 149-155" ist ein Verfahren zur Umwandlung von asbesthaltigen Abfällen mittels einer Multi-Mode-Mikrowellen-Strahlung beschrieben.

Ferner beschreibt die nachveröffentlichte EP 2 062 660 A1 ein Verfahren zur Inertisierung von Mineralfasern unter Mikrowellen-Anwendung. Hierbei werden die Mineralfasern ohne Vorzerkleinerung durch Einwirken einer Multi-Mode-Mikrowellenstrahlung verschlackt. Anschließend wird das verschlackte Mineralfasermaterial gemahlen und schließlich das aufgemahlene, verschlackte Mineralfasermaterial zu einem Baustoff verarbeitet. Zur Erzeugung der Multi-Mode-Mikrowellenstrahlung wird eine Mikrowellenkammer eingesetzt, in der Magnetrone die in ihnen erzeugte Mikrowellenenergie direkt in einen Kammerinnenraum im Multi-Mode-Zustand abstrahlen.

Der Erfindung liegt die Aufgabe zugrunde, eine Vorrichtung und ein Verfahren zur strukturellen Umwandlung von Mineralwolle anzugeben, welche einfach und kostengünstig realisierbar sind und gleichzeitig eine hohe Sicherheit und einen hohen Schutz vor einer Freisetzung gefährlicher Mineralfasern bieten.

Die Aufgabe wird erfindungsgemäß gelöst durch eine Vorrichtung, welche die im Anspruch 1 angegebenen Merkmale aufweist. Hinsichtlich des Verfahrens wird die Aufgabe erfindungsgemäß durch die im Anspruch 6 angegebenen Merkmale gelöst.

Vorteilhafte Ausgestaltungen der Erfindung sind Gegenstand der Unteransprüche.

Die Vorrichtung zur strukturellen Umwandlung von Mineralwolle umfasst erfindungsgemäß einen Multi-Mode-Mikrowellenofen zur Verschlackung von Fasern der Mineralwolle, ein in Verarbeitungsrichtung vor dem Multi-Mode-Mikrowellenofen angeordnetes Schneideaggregat zur groben Zerkleinerung der Mineralwolle und zumindest einen in Verarbeitungsrichtung vor dem Schneideaggregat angeordneten Detektor und zumindest einen in Verarbeitungsrichtung vor dem Schneideaggregat angeordneten Selektor zur Extraktion von Eisen- und Nichteisenmetallen aus der Mineralwolle.

Aufgrund der Erhitzung der Mineralwolle mittels des Multi-Mode-Mikrowellenofens ist in vorteilhafter Weise eine derartige strukturelle Veränderung der Mineralwolle erzielbar, dass eine vollständige Verschlackung der Fasern und somit eine für den Menschen gesundheitlich unschädliche Substanz erzeugbar sind.

Die Multi-Mode-Mikrowellenstrahlung ist dabei derart ungerichtet bzw. ungeordnet, dass eine gleichmäßige Erhitzung vom Inneren der Mineralwolle aus nach außen möglich ist. Diese gleichmäßige Erhitzung führt wiederum zu einer gleichmäßigen und vollständigen Verschlackung der Fasern der Mineralwolle und somit zu einer Zerstörung deren gesundheitsschädlicher Struktur. Ferner zeichnet sich der Multi-Mode-Mikrowellenofen insbesondere im Vergleich zu so genannten Mono-Mode-Mikrowellenöfen durch eine geringe Energieaufnahme aus. Weiterhin ermöglichen die Detektoren und Selektoren zur Extraktion von Eisen- und Nichteisenmetallen aus der Mineralwolle die Vermeidung einer Beschädigung nachgeschalteter Anlagen und eine Realisierung einer Werkstoff- bzw. Rohstoffrückgewinnung. Anhand des Schneideaggregates zur Zerkleinerung der Mineralwolle ist die Mineralwolle derart zerkleinerbar, dass eine möglichst einfache Weiterverarbeitung dieser, insbesondere eine einfache Vermischbarkeit mit einem Suszeptor, und ein vereinfachtes Verpressen des Mineralwolle-Suszeptor-Gemisches möglich sind.

Weiterhin weist der Mikrowellenofen vorzugsweise Mittel zur Entstickung und/oder Nachverbrennung von Abgasen auf, welche bei der Verschlackung der Mineralwolle in dem Mikrowellenofen entstehen, woraus eine umweltgerechte Umwandlung der Mineralwolle resultiert.

Zu der Vermischung der Mineralwolle mit dem Suszeptor ist vorzugsweise ein Mischaggregat vorgesehen, wobei der Suszeptor eine schnelle und vollständige Verschlackung der Mineralwolle bzw. deren Fasern begünstigt. Bei dem Suszeptor handelt es sich insbesondere um einen Zusatzstoff, der die Mikrowellenstrahlung absorbiert und deren Energie derart in Wärme umsetzt und an die Fasern der Mineralwolle abgibt, dass eine Beschleunigung und Verbesserung der Verschlackung der Fasern der Mineralwolle realisierbar ist.

Zur Verpressung des Mineralwolle-Suszeptor-Gemisches ist gemäß einer Ausgestaltung der erfindungsgemäßen Vorrichtung eine Presse vorgesehen, um ein Agglomerat definierter Korngröße des Gemisches und somit eine optimierte Prozessführung zu erreichen.

In einer besonders gewinnbringenden Weiterbildung ist die Vorrichtung mobil ausgerührt, so dass die Umwandlung der Mineralwolle am Ort ihres Aufkommens ausführbar ist, wodurch aufwändige Transporte vermeidbar sind und das Risiko der Freisetzung von gesundheitsschädlichen Fasern minimierbar ist.

Bei dem erfindungsgemäßen Verfahren zur strukturellen Umwandlung von Mineralwolle wird die Mineralwolle derart mittels Multi-Mode-Mikrowellenstrahlung erhitzt, dass Fasern der Mineralwolle verschlacken und somit in vorteilhafter Weise ein für die gesundheitsunschädliches Produkt entsteht. Erfindungsgemäß ist weiterhin vorgesehen, dass die Mineralwolle vor dem Erhitzen ein- oder mehrstufig grob zerkleinert wird und aus der Mineralwolle vor dem Erhitzen und vor der Zerkleinerung Eisen- und Nichteisenmetalle mittels zumindest einem Detektor und zumindest einem Selektor extrahiert werden.

Die ein- oder mehrstufige Zerkleinerung der Mineralwolle vor dem Verschlacken ermöglicht dabei eine Vereinheitlichung einer Korngröße und eine Homogenisierung, woraus die Möglichkeit einer einfachen Weiterverarbeitung der Mineralwolle resultiert. Aufgrund der Extraktion der Eisen- und Nichteisenmetalle aus der Mineralwolle vor dem Verschlacken wird in besonders vorteilhafter Weise eine Beschädigung nachgeschalteter Anlagen durch Metallpartikel vermieden und eine Werkstoff- bzw. Rohstoffrückgewinnung können realisiert werden.

In einer Ausgestaltung des erfindungsgemäßen Verfahrens wird die Mineralwolle vor dem Verschlacken befeuchtet, so dass eine Reduzierung der Freisetzung von gesundheitsschädlichen Fasern der Mineralwolle während des Verfahrens zur strukturellen Umwandlung vermieden oder zumindest reduziert wird.

Zusätzlich wird der Mineralwolle vor dem Verschlacken zumindest ein Suszeptor beigemischt, der aufgrund seines Absorptionsvermögens der Mikrowellenstrahlung und einer Umwandlung deren Energie in Wärme eine schnelle und vollständige Verschlackung der Mineralwolle bzw. deren Fasern mittels der Mikrowellenstrahlung begünstigt.

Durch eine anschließende Verpressung und einer damit einhergehenden Verdichtung des Gemisches der Mineralwolle und des Suszeptors vor dem Verschlacken werden Agglomerate des Gemisches der Mineralwolle und des Suszeptors mit einer einheitlichen Korngröße erzeugt.

Zusätzlich wird die die Mineralwolle während der Erhitzung in dem Mikrowellenofen umgewälzt, um eine gleichmäßige und allumfassende Verschlackung der Fasern der Mineralwolle zu realisieren.

Auch werden eine Leistung des Mikrowellenofens, eine Lüfterstufe des Mikrowellenofens und/oder eine Behandlungszeit der Mineralwolle in dem Mikrowellenofen bedarfsabhängig manuell und/oder automatisch eingestellt, um die Behandlung der Mineralwolle mittels der Mikrowellen in Abhängigkeit einer Art der zu behandelnden Mineralwolle, beispielsweise Glas-, Stein- und/oder Schlackenwolle, anzupassen.

Gemäß einer besonders vorteilhaften Ausgestaltung des erfindungsgemäßen Verfahrens wird die Mineralwolle nach der Verschlackung gemahlen. Somit kann die verschlackte und faserfreie Mineralwolle vorzugsweise zu einer Weiterverwendung als Sekundärrohstoff bei der Erzeugung von Rohstoffen oder Produkten, wie z. B. im Rahmen der Zementproduktion, der Betonherstellung, bei der Produktion von Calciumsilikathydratprodukten, in der Ziegel- und/oder in der Asphaltproduktion eingesetzt und eine Faserfreisetzung durch die bereits abgeschlossene Verschlackung vermieden werden.

Zusammenfassend ist es mittels der erfindungsgemäßen Vorrichtung und mittels des erfindungsgemäßen Verfahrens sowie deren Ausgestaltungen möglich, eine sichere Verwertung, d. h. eine irreversible Faserzerstörung von Mineralwolle, zu realisieren. Der entscheidende Vorteil des Verfahrens liegt in der Verschlackung der Mineralwolle bereits vor der Weiterverarbeitung als Sekundärrohstoff, welche eine Herabsetzung der Emission der gesundheitsschädlichen Fasern zur Folge hat. Weiterhin werden Deponien zur Lagerung der Mineralwolle entlastet und Umweltbelastungen durch Faseremissionen, Abwässer und/oder Abfälle verringert.

Ausführungsbeispiele der Erfindung werden im Folgenden anhand von Zeichnungen näher erläutert.

Darin zeigen:
- Figur 1: schematisch einen Verfahrensablauf zur Verschlackung von Mineralwolle mittels eines Mikrowellenofens,
- Figur 2: schematisch ein Blockschaltbild einer Vorrichtung mit einem Mikrowellenofen zur Verschlackung der Mineralwolle,
- Figur 3: eine Draufsicht eines Mikrowellenofens,
- Figur 4: eine Frontansicht des Mikrowellenofens gemäß Figur 2, und
- Figur 5: eine Verteilung von Mikrowellenstrahlung des Mikrowellenofens gemäß Figur 3.

Einander entsprechende Teile sind in allen Figuren mit den gleichen Bezugszeichen versehen.

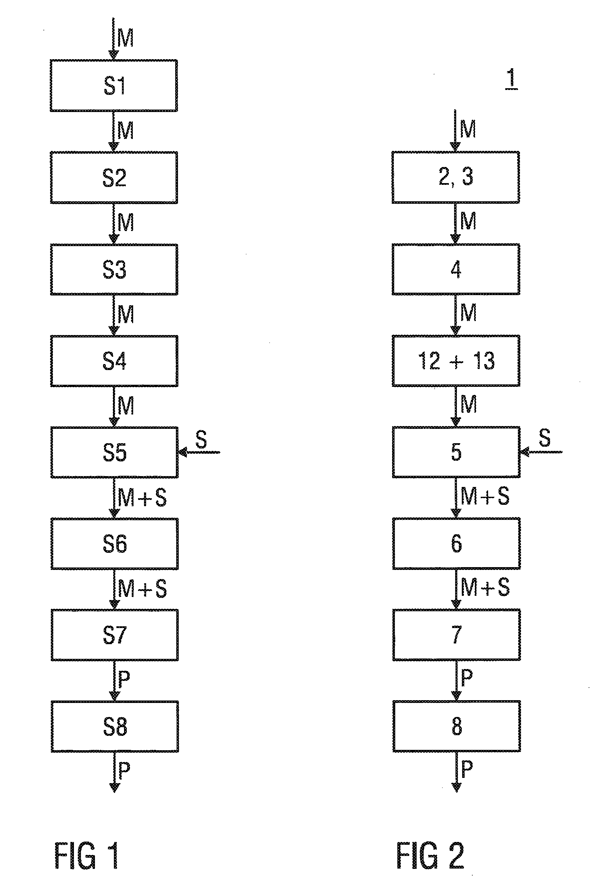

Figur 1 zeigt schematisch einen Verfahrensablauf zur Verschlackung von Mineralwolle M mittels einer in Figur 2 dargestellten Vorrichtung 1 zur Verschlackung der Mineralwolle M.

In einem ersten Schritt S1 des Verfahrens wird die Mineralwolle M vorgenässt, um eine Freisetzung von Fasern der Mineralwolle M in den folgenden Schritten S2 bis S7 zu vermeiden bzw. zumindest zu reduzieren.

Die Mineralwolle M ist insbesondere aus künstlichen Mineralfasern gebildet, wobei es sich bei der Mineralwolle M um Glas-, Stein, Schlacken- und/oder Asbestwolle handelt, zu deren Herstellung Gläser, vulkanische Gesteine, Kalksteine und/oder das so genannte Asbest verwendet werden. Die Mineralwolle M ist weiterhin mit Binde- und Schmelzmitteln versehen, welche eine dauerhafte Wasserabweisung der Mineralwolle M sicherstellen, eine Griffigkeit der Mineralwolle M verbessern und die Fasern in einem Verband binden sollen. Schmelzmittel sind beispielsweise Mineralöle, Öl-Wasser-Emulsionen, Silikonöle oder Silikonharze und Bindemittel in Wasser weitgehend gelöste Gemische aus Kunstharzverbindungen, wie z. B. Phenolharze und/oder Formaldehydharze.

Im zweiten Schritt S2 des Verfahrens werden in der Mineralwolle M enthaltene Eisen- und Nichteisenmetalle mittels in Figur 2 näher dargestellten Detektoren 2 und Selektoren 3 erfasst, selektiert und aus der Mineralwolle M extrahiert, um eine Beschädigung nachgeschalteter Anlagen, wie einem Schneideaggregat 4, einem Mischaggregat 5, einer Presse 6, einem Mikrowellenofen 7 und einer Mühle 8, zu vermeiden und eine Rückgewinnung und Weiterverarbeitung der Eisen- und Nichteisenmetalle zu realisieren.

Im dritten Schritt S3 wird die Mineralwolle M mittels dem Schneideaggregat 4, bei welchem es sich insbesondere um einen Schneckenzerkleinerer oder einen Schredder handelt, grob zerkleinert, um eine Vereinheitlichung der Korngröße und eine Homogenisierung zu erreichen. Die Zerkleinerung kann dabei ein- oder zweistufig erfolgen.

Im vierten Schritt S4 wird die Mineralwolle M erneut mittels weiterer Detektoren 12 und Selektoren 13 untersucht, um in der Mineralwolle M verbliebene Eisen- und Nichteisenmetalle möglichst vollständig aus der Mineralwolle M zu entfernen.

Im fünften Schritt S5 wird der feuchteten und zerkleinerten Mineralwolle in dem Mischaggregat 5 ein Suszeptor S beigemischt und eine Suspension erzeugt, wobei das Mischaggregat 5 beispielsweise ein Rührbehälter oder ein Trommelmischer ist. Der Suszeptor S ist ein Zusatzstoff, der Mikrowellenstrahlung absorbiert, deren Energie in Wärme umsetzt und im siebten Schritt S7 während der Bearbeitung des Mineralwolle-Suszeptor-Gemisches an die Fasern der Mineralwolle M abgibt und somit eine Beschleunigung und Verbesserung der Verschlackung der Fasern der Mineralwolle M bewirkt. Je nach Eigenschaften der Mineralwolle M können dabei ein oder mehrere verschiedene Suszeptoren S verwendet werden, welche jeweils auf die zu verschlackende Mineralwolle M angepasst sind.

Im sechsten Schritt S6 wird die aus der Mineralwolle M und dem Suszeptor S gebildete Suspension mittels der Presse 6 mit dem Ziel der Erzeugung von Agglomeraten mit definierter Korngröße verdichtet, um im siebten Schritt S7 in dem Mikrowellenofen 7 derart mit Mikrowellenstrahlung beaufschlagt zu werden, dass die Mineralwolle M bzw. deren Fasern irreversibel verschlacken und ein faserfreies und somit für den Menschen gesundheitsunschädliches Produkt P entsteht.

Dieses faserfreie Produkt P, d. h. die verschlackte Mineralwolle M, wird in einem achten Schritt S8 des Verfahrens mittels einer Mühle 8, insbesondere einer Exzenterschwingmühle, gemahlen und anschließend vorzugsweise als Sekundärrohstoff einem Herstellungsverfahren zugeführt, wobei sich das faserfreie Produkt P aufgrund der chemischen Zusammensetzung der Mineralwolle M insbesondere zu einer Verwertung bei der der Herstellung von Baustoffen, beispielsweise von Zement, Beton, Mörtel, Kalksandstein, Porenbeton, Ziegel und/oder Asphalt, eignet.

Figur 2 zeigt die Vorrichtung 1 zur Verschlackung der Mineralwolle M in stark vereinfachter Weise als Blockschaltbild, wobei die Vorrichtung im dargestellten Ausführungsbeispiel aus den Detektoren 2, 12, Selektoren 3, 13, dem Schneideaggregat 4, dem Mischaggregat 5, der Presse 6, dem Mikrowellenofen 7 und der Mühle 8 gebildet ist.

Die Vorrichtung 1 ist dabei insbesondere mobil ausgebildet, so dass diese an beliebigen Orten errichtet werden kann und die Mineralwolle M vorzugsweise am Ort ihres Aufkommens verschlackt werden kann und somit das Risiko einer Freisetzung der Fasern, welches insbesondere auch beim Transport der Mineralwolle M besteht, minimiert wird.

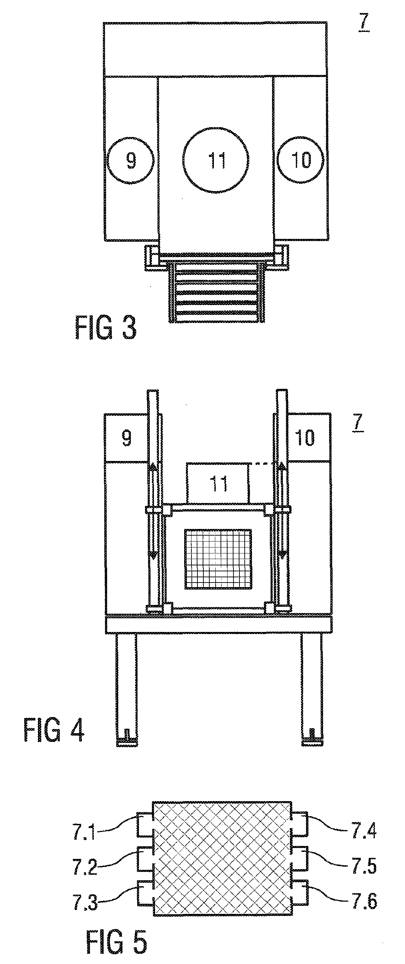

**Figur 3** und **Figur 4** zeigen den Mikrowellenofen 7 in einer Draufsicht und einer Frontansicht und **Figur 5** eine Verteilung von Mikrowellenstrahlung des Mikrowellenofens 7.

Bei dem Mikrowellenofen 7 handelt es sich um einen so genannten Multi-Mode-Mikrowellenofen, dessen Mikrowellenstrahlung gemäß Figur 5 ungeordnet ist. Dies ermöglicht im Vergleich zu Mikrowellenöfen mit einer Hohlleitereinspeisung eine gleichmäßige Erwärmung der Mineralwolle M und eine Vermeidung von örtlich begrenzten Überhitzungen, so genannten Hot-Spots, welche durch Energieüberlagerungen entstehen. Dadurch wird eine gleichmäßige Erwärmung der Mineralwolle M vom Inneren dieser nach außen erzielt, woraus wiederum eine gleichmäßige und vollständige Verschlackung der Fasern der Mineralwolle M resultiert. Weiterhin wird eine notwendige Kerntemperatur zur Verschlackung der Mineralwolle M mit einem Minimum an eingesetzter Energie erzielt.

Während des Betriebes des Mikrowellenofens 7, welcher im dargestellten Ausführungsbeispiel gemäß Figur 5 sechs Magnetrone 7.1 bis 7.6 aufweist, geben die Magnetrone 7.1 bis 7.6 die Mikrowellenstrahlung, d. h. die Energie, direkt in den Kammerinnenraum des Mikrowellenofens 7 ab, da sie direkt durch Öffnungen in der Kammerwand des Mikrowellenofens 7 abstrahlen. In weiteren nicht näher dargestellten Ausführungsbeispielen der Erfindung kann der Mikrowellenofen 7 auch eine geringe oder eine größere Anzahl an Magnetronen aufweisen.

Zur Erhitzung und Verschlackung der Mineralwolle M kann sowohl die Leistung des Mikrowellenofens 7, eine Lüfterstufe von Zuluftventilatoren 9 und 10 und eines Abluftventilators 11 des Mikrowellenofens 7 und/oder eine Behandlungszeit der Mineralwolle M in dem Mikrowellenofen 7 bedarfsabhängig, d. h. in Abhängigkeit von Eigenschaften und einer stofflichen Zusammensetzung der Mineralwolle M, manuell und/oder automatisch eingestellt werden, so dass stets eine optimale und vollständige Verschlackung der Mineralwolle M bei minimalem Energieeinsatz möglich ist.

Um die Gleichmäßigkeit der Erhitzung der Mineralwolle M, insbesondere in einem Durchlaufbetrieb des Mikrowellenofens 7, weiter zu erhöhen, umfasst der Mikrowellenofen 7 nicht näher dargestellte Mittel, beispielsweise eine so genanntes Drehrohr, anhand derer die Mineralwolle M während der Erhitzung in dem Mikrowellenofen 7 umgewälzt wird.

Da bei der Verschlackung der Mineralwolle M umweltschädliche Abgase entstehen können, umfasst der Mikrowellenofen 7 weiterhin nicht näher dargestellte Mittel zur Entstickung und/oder Nachverbrennung der Abgase, so dass von dem Verfahren zur Verschlackung der Mineralwolle M keine umweltschädigende Wirkung ausgeht. *

### BEZUGSZEICHENLISTE

- 1: Vorrichtung
- 2: Detektor
- 3: Selektor
- 4: Schneideaggregat
- 5: Mischaggregat
- 6: Presse
- 7: Mikrowellenofen
7.1 bis 7.6 Magnetron
- 8: Mühle
- 9: Zuluftventilator
- 10: Zuluftventilator
- 11: Abluftventilator
- 12: Detektor
- 13: Selektor

- M: Mineralwolle
- P: Produkt
- S: Suszeptor
- S1 bis S8: Schritt

## Patentansprüche

1. Vorrichtung (1) zur strukturellen Umwandlung von Mineralwolle (M),
**dadurch gekennzeichnet, dass** die Vorrichtung (1) einen Multi-Mode-Mikrowellenofen (7) zur Verschlackung von Fasern der Mineralwolle (M), ein in Verarbeitungsrichtung vor dem Multi-Mode-Mikrowellenofen (7) angeordnetes Schneideaggregat (4) zur groben Zerkleinerung der Mineralwolle (M) und zumindest einen in Verarbeitungsrichtung vor dem Schneideaggregat (4) angeordneten Detektor (2, 12) und zumindest einen in Verarbeitungsrichtung vor dem Schneideaggregat (4) angeordneten Selektor (3, 13) zur Extraktion von Eisen- und Nichteisenmetallen aus der Mineralwolle (M) umfasst.

2. Vorrichtung (1) nach Anspruch 1,
**dadurch gekennzeichnet, dass** der Mikrowellenofen (7) Mittel zur Entstickung und/oder Nachverbrennung von Abgasen aufweist.

3. Vorrichtung (1) nach Anspruch 1 oder 2,
**dadurch gekennzeichnet, dass** ein Mischaggregat (5) zur Vermischung der Mineralwolle (M) mit einem Suszeptor (S) vorgesehen ist.

4. Vorrichtung (1) nach einem der vorherigen Ansprüche,
**dadurch gekennzeichnet, dass** eine Presse (6) zum Verpressen des Gemisches der Mineralwolle (M) und des Suszeptors (S) vorgesehen ist.

5. Vorrichtung (1) nach einem der vorherigen Ansprüche,
**dadurch gekennzeichnet, dass** die Vorrichtung (1) mobil ist.

6. Verfahren zur strukturellen Umwandlung von Mineralwolle (M),
**dadurch gekennzeichnet, dass** die Mineralwolle (M) derart mittels Multi-Mode-Mikrowellenstrahlung erhitzt wird, dass Fasern der Mineralwolle (M) verschlacken, wobei die Mineralwolle (M) vor dem Erhitzen ein- oder mehrstufig grob zerkleinert wird und aus der Mineralwolle (M) vor dem Erhitzen und vor der Zerkleinerung Eisen- und Nichteisenmetalle mittels zumindest einem Detektor (2, 12) und zumindest einem Selektor (3, 13) extrahiert werden.

7. Verfahren nach Anspruch 6,
**dadurch gekennzeichnet, dass** die Mineralwolle (M) vor dem Erhitzen befeuchtet wird.

8. Verfahren nach 6 oder 7,
**dadurch gekennzeichnet, dass** der Mineralwolle (M) vor dem Erhitzen zumindest ein Suszeptor (S) beigemischt wird.

9. Verfahren nach Anspruch 8,
**dadurch gekennzeichnet, dass** das Gemisch der Mineralwolle (M) und des Suszeptors (S) vor dem Erhitzen verpresst wird.

10. Verfahren nach einem der Ansprüche 6 bis 9,
**dadurch gekennzeichnet, dass** die Mineralwolle (M) während der Erhitzung umgewälzt wird.

11. Verfahren nach einem der Ansprüche 6 bis 10,
**dadurch gekennzeichnet, dass** eine Leistung des Mikrowellenofens (7), eine Lüfterstufe des Mikrowellenofens (7) und/oder eine Behandlungszeit der Mineralwolle (M) in dem Mikrowellenofen (7) bedarfsabhängig manuell und/oder automatisch eingestellt werden.

12. Verfahren nach einem der Ansprüche 6 bis 11,
**dadurch gekennzeichnet, dass** die Mineralwolle (M) nach der Verschlackung gemahlen wird.

## Claims

1. Device (1) for changing the structure of mineral wool (M), **characterized in that** the device (1) comprises a multi-mode microwave oven (7) for the scorification of fibres of the mineral wool (M), a cutting assembly (4), arranged upstream of the multi-mode microwave oven (7) in the processing direction, for the coarse comminution of the mineral wool (M), and at least one detector (2, 12) arranged upstream of the cutting assembly (4) in the processing direction and at least one selector (3, 13), arranged upstream of the cutting assembly (4) in the processing direction, for the extraction of ferrous and non-ferrous metals from the mineral wool (M).

2. Device (1) according to Claim 1, **characterized in that** the microwave oven (7) has means for the removal of nitrogen from and/or the afterburning of exhaust gases.

3. Device (1) according to Claim 1 or 2, **characterized in that** a mixing assembly (5) for mixing the mineral wool (M) with a susceptor (S) is provided.

4. Device (1) according to one of the preceding claims, **characterized in that** a press (6) for pressing the mixture of the mineral wool (M) and of the susceptor (S) is provided.

5. Device (1) according to one of the preceding claims, **characterized in that** the device (1) is mobile.

6. Method for changing the structure of mineral wool (M), **characterized in that** the mineral wool (M) is heated by means of multi-mode microwave radiation in such a way that fibres of the mineral wool (M) are scorified, the mineral wool (M) being coarsely comminuted in a single-stage or multi-stage manner prior to heating, and ferrous and non-ferrous metals being extracted from the mineral wool (M), prior to heating and prior to comminution, by means of at least one detector (2, 12) and at least one selector (3, 13).

7. Method according to Claim 6, **characterized in that** the mineral wool (M) is moistened prior to heating.

8. Method according to Claim 6 or 7, **characterized in that** at least one susceptor (S) is admixed to the mineral wool (M) prior to heating.

9. Method according to Claim 8, **characterized in that** the mixture of the mineral wool (M) and of the susceptor (S) is pressed prior to heating.

10. Method according to one of Claims 6 to 9, **characterized in that** the mineral wool (M) is circulated during heating.

11. Method according to one of Claims 6 to 10, **characterized in that** a power of the microwave oven (7), a fan stage of the microwave oven (7) and/or a treatment time of the mineral wool (M) in the microwave oven (7) are set manually and/or automatically as a function of the requirements.

12. Method according to one of Claims 6 to 11, **characterized in that** the mineral wool (M) is ground after scorification.

## Revendications

1. Dispositif (1) pour la transformation structurelle de laine minérale (M), **caractérisé en ce que** le dispositif (1) comprend un four à micro-ondes multimodal (7) pour la scorification de fibres de la laine minérale (M), un ensemble de coupe (4) disposé avant le four à micro-ondes multimodal (7) dans la direction de traitement pour le broyage grossier de la laine minérale (M), au moins un détecteur (2, 12) disposé avant l'ensemble de coupe (4) dans la direction de traitement et au moins un sélecteur (3, 13) disposé avant l'ensemble de coupe (4) dans la direction de traitement pour l'extraction de métaux ferreux et non-ferreux hors de la laine minérale (M).

2. Dispositif (1) selon la revendication 1, **caractérisé en ce que** le four à micro-ondes (7) présente des moyens pour la dénitruration et/ou la post-combustion de gaz d'échappement.

3. Dispositif (1) selon la revendication 1 ou 2, **caractérisé en ce qu'**il est prévu un ensemble de mélange (5) pour le mélange de la laine minérale (M) avec un suscepteur (S).

4. Dispositif (1) selon l'une quelconque des revendications précédentes, **caractérisé en ce qu'**il est prévu une presse (6) pour le pressage du mélange de la laine minérale (M) et du suscepteur (S).

5. Dispositif (1) selon l'une quelconque des revendications précédentes, **caractérisé en ce que** le dispositif (1) est mobile.

6. Procédé pour la transformation structurelle de laine minérale (M), **caractérisé en ce que** l'on chauffe la laine minérale (M) au moyen d'un rayonnement de micro-ondes multimodal, de telle manière que des fibres de la laine minérale (M) se scorifient, dans lequel on broie grossièrement la laine minérale (M) en une ou plusieurs étapes avant le chauffage et on extrait hors de la laine minérale (M), avant le chauffage et avant le broyage, des métaux ferreux et non-ferreux au moyen d'au moins un détecteur (2, 12) et d'au moins un sélecteur (3, 13).

7. Procédé selon la revendication 6, **caractérisé en ce que** l'on humidifie la laine minérale (M) avant le chauffage.

8. Procédé selon la revendication 6 ou 7, **caractérisé en ce que** l'on ajoute à la laine minérale (M) au moins un suscepteur (S) avant le chauffage.

9. Procédé selon la revendication 8, **caractérisé en ce que** l'on presse le mélange de la laine minérale (M) et du suscepteur (S) avant le chauffage.

10. Procédé selon l'une quelconque des revendications 6 à 9, **caractérisé en ce que** l'on fait circuler la laine minérale (M) pendant le chauffage.

11. Procédé selon l'une quelconque des revendications 6 à 10, **caractérisé en ce que** l'on règle manuellement et/ou automatiquement, en fonction de la demande, une puissance du four à micro-ondes (7), un étage de ventilateur du four à micro-ondes (7) et/ou un temps de traitement de la laine minérale (M) dans le four à micro-ondes (7).

12. Procédé selon l'une quelconque des revendications 6 à 11, **caractérisé en ce que** l'on moud la laine minérale (M) après la scorification.
